# EUROPÄISCHE PATENTANMELDUNG

(11) **EP 1 600 402 A1**
(43) Veröffentlichungstag der Anmeldung: **30.11.2005**
(21) Anmeldenummer: 04011012.4
(22) Anmeldetag: 07.05.2004
(51) Int. Cl.: B65D 85/57

(54) **Hülle für ein oder mehrere scheibenförmige Objekte**

(71) Anmelder: Pielok, Bernhard Dipl.-D., 65232 Taunusstein (DE); Bauser, Michael, 65594 Runkel (DE)
(72) Erfinder: Pielok, Bernhard Dipl.-D., 65232 Taunusstein (DE); Bauser, Michael, 65594 Runkel (DE)

(57) **Zusammenfassung**

Es handelt sich um eine Hülle für die Archivierung und / oder den Transport bzw. Versand eines scheibenförmigen Objekts, wie z.B. eines optischen Datenträgers. Die Hülle besteht aus einem faltbaren Material zur Bildung einer Rückseite der Hülle, einem Einschubabschnitt (108) zur Bildung eines Einschubbereichs zur Aufnahme des Objekts und einen Verschlussabschnitt (118) zur Bildung einer Front der Hülle, wobei der Einschubabschnitt an einer ersten Seite (130, 132) des Basisabschnitts und der Verschlussabschnitt an einer zweiten Seite (140, 142) des Basisabschnitts angeordnet ist, die ersten und zweiten Seiten des Basisabschnitts einander gegenüberliegen, der Basisabschnitt an der Rückseite zur Aufnahme eines an einem peripheren Bereich (120) des Verschlussabschnitts angeordneten lösbaren und wieder verschließbaren Verschlusselements (122) ausgebildet ist, und der Einschubabschnitt ein Sicherungselement (110) zur Fixierung des optischen Datenträgers in dem Einschubbereich aufweist. Von besonderem Vorteil bei der erfindungsgemäßen Hülle ist, dass diese gleichermaßen für die Archivierung als auch für den Postversand geeignet ist. Wegen ihres geringen Gewichts kann die Hülle mit dem eingelegten Datenträger als "Warensendung kompakt" versendet werden.

## Beschreibung

Die Erfindung betrifft eine Hülle für ein oder mehrere scheibenförmige Objekte, insbesondere für scheibenförmige Datenträger, z.B. für eine Diskette, oder optische Datenträger, wie CD, DVD oder eine Blu-Ray-Disk.

CDs und CD-ROMs sowie andere optische Datenträger werden üblicherweise in so genannten Jewel-Cases aus Kunststoff aufbewahrt und für den Versand aufwendig zusätzlich verpackt.

Der größte Nachteil von solchen Jewel-Cases ist deren Zerbrechlichkeit. Unter Druck oder Belastung fällt das Jewel-Cases auseinander und wird derart beschädigt, dass die Teile kaum mehr zusammengesteckt werden können. Darüber hinaus sind auch die Möglichkeiten bei der Gestaltung und hinsichtlich der Produktionstechnik der Jewel-Cases sehr eingeschränkt. Solche durch Kunststoff-Spritzgußverfahren hergestellte Jewel-Cases sind beispielsweise aus der DE 69900868T2 und der DE 69428203T2 bekannt.

Als Alternative zu der ökologisch bedenklichen Kunststoffverpackung sind auch bereits CD-Hüllen aus Papier oder Pappe bekannt geworden, die zum Teil auch für den Versand geeignet sind (vgl. DE 20021924U1, DE 20020123U1, DE 20019274U1 und DE 29608426U1, DE 20305834U1).

Der Erfindung liegt demgegenüber die Aufgabe zu Grunde, eine verbesserte Hülle für ein oder mehrere scheibenförmige Objekte, insbesondere für einen oder mehrere scheibenförmige, optische Datenträger zu schaffen, die sowohl für die Archivierung als auch für den Postversand als Warensendung geeignet ist.

Die der Erfindung zu Grunde liegende Aufgabe wird mit den Merkmalen des Patentanspruchs 1 gelöst. Bevorzugte Ausführungsformen der Erfindung sind in den abhängigen Patentansprüchen angegeben.

Die erfindungsgemäße Hülle besteht aus einem faltbaren Material, vorzugsweise Karton, insbesondere Chromosulfat-Karton. Alternativ kann auch Papier, insbesondere gestrichenes Papier, oder Kunststoff, insbesondere Polyvenylchlorid (PVC), verwendet werden.

Das faltbare Material hat einen Basisabschnitt zur Bildung einer Rückseite der Hülle. An gegenüberliegenden Seiten des Basisabschnitts sind ein Einschubabschnitt und ein Verschlussabschnitt angeordnet. Der Einschubabschnitt dient zur Bildung eines Einschubbereichs zur Aufnahme des scheibenförmigen Objekts, insbesondere des optischen Datenträgers. Der Verschlussabschnitt dient dagegen zur Bildung einer Frontseite der Hülle. Der Verschlussabschnitt hat an einem peripheren Bereich ein Verschlusselement zur Aufnahme an der Rückseite des Basisabschnitts. Dieses Verschlusselement ist lösbar und wieder verschließbar.

Die erfindungsgemäße Hülle hat gegenüber dem Stand der Technik verschiedene Vorteile. Insbesondere ist die Steifigkeit der Hülle im Vergleich zu CD-Hüllen aus Papier oder Karton, wie sie aus dem Stand der Technik bekannt sind, verbessert.

Durch die Klebung von zwei übereinander liegenden Kartonflächen wird die Biegesteifigkeit erhöht und die Verwindungsneigung der Hülle reduziert, ohne die notwendige Flexibilität negativ zu beeinflussen. Dies erhöht die Lebensdauer der Hülle, insbesondere für die Zwecke der Archivierung und steigert die Sicherheit beim möglichen Transport bzw. Versand z.B. des Datenträgers in der Hülle. Vorzugsweise haben die Kartonflächen jeweils ein Gewicht zwischen 250 und 300 g/m², insbesondere 280 g/m².

Ferner ist das Einschieben z.B. des optischen Datenträgers in den Einschubbereich leichter zu handhaben als das im Stand der Technik der Fall ist, wobei gleichzeitig aufgrund einer vorzugsweise an dem Einschubabschnitt angeordneten Sicherung der optische Datenträger in dem Einschubbereich sicher für die Archivierung und / oder den Transport oder den Versand fixiert wird.

Ein weiterer Vorteil der erfindungsgemäßen Hülle ist, dass diese ohne eine Klebung realisierbar ist. Dies wird durch das Verschlusselement des Verschlussabschnitts ermöglicht, welches zur Aufnahme an der Rückseite des Basisabschnitts ausgebildet ist.

Nach einer bevorzugten Ausführungsform der Erfindung ist das Sicherungselement zungenförmig ausgebildet und in einem Randbereich des Einschubabschnitts angeordnet. Vorzugsweise wird das Sicherungselement durch eine zum Beispiel halbkreisförmige Stanzung in dem Randbereich des Einschubbereichs gewonnen. Dabei ist besonders vorteilhaft, dass das zungenförmige Sicherungselement auch eine Klemmwirkung auf z.B. den optischen Datenträger ausüben kann, wenn er in das Sicherungselement eingesteckt wird.

Nach einer weiteren bevorzugten Ausführungsform der Erfindung ist in dem peripheren Bereich des Verschlussabschnitts ein Griffloch angeordnet. Durch das Griffloch kann ein Benutzer leicht das Verschlusselement aus der Rückseite des Basisabschnitts herausziehen, um die Hülle zu öffnen und den optischen Datenträger zu entnehmen.

Nach einer weiteren bevorzugten Ausführungsform der Erfindung ist der Einschubabschnitt zur Bildung eines weiteren Einschubbereichs zur Aufnahme einer rechteckigen Karte ausgebildet. Der weitere Einschubbereich wird durch entsprechende Faltung des Einschubabschnitts geformt. Vorzugsweise hat der weitere Einschubbereich eine Breite, die in etwa der Breite einer üblichen Visiten- oder Grußkarte entspricht. Insbesondere für den gewerblichen Bereich ist es eine sinnvolle Alternative, z.B. dem Datenträger eine persönliche Visitenkarte beizulegen.

Nach einer weiteren bevorzugten Ausführungsform der Erfindung weist der Einschubabschnitt einen Klebebereich zur Verklebung mit einem entsprechenden Klebebereich des Basisabschnitts auf. Die Klebung kann dabei während der Produktion der Hülle vorgenommen werden oder benutzerseitig. In letzterem Fall ist vorzugsweise in einem der Klebebereiche eine selbstklebende Klebefolie mit einer Schutzfolie, die der Benutzer abziehen kann, angeordnet.

Nach einer weiteren bevorzugten Ausführungsform der Erfindung hat der Verschlussbereich auf seiner Innenseite und/oder der Frontseite ein Beschriftungsfeld. Die Beschriftungsfelder auf der Frontseite können beispielsweise als Adressfeld verwendet werden und / oder insbesondere im oberen Bereich der Hülle zur Beschriftung für die Zwecke der Archivierung. Dabei kann die Beschriftung sowohl handschriftlich vorgenommen werden als auch durch Bedrucken oder durch Aufkleben von beschrifteten Etiketten. Das Beschriftungsfeld auf der Innenseite kann beispielsweise für eine Inhaltsangabe, Bedienungsanleitung, Lizenzbedingungen und / oder weiteren Text verwendet werden.

Nach einer weiteren bevorzugten Ausführungsform der Erfindung hat der Verschlussbereich einen Einklappbereich, der vor dem Schließen der Hülle nach innen geklappt wird. Dieser Verschlussbereich kann als dekoratives Element verwendet werden, insbesondere dann, wenn die Frontseite Stanzungen aufweist.

Nach einer weiteren bevorzugten Ausführungsform der Erfindung hat der Einschubbereich ein Verschlusselement zur Aufnahme an der Rückseite des Basisabschnitts. Dies ermöglicht es, die Hülle gänzlich ohne Klebung zu realisieren. Insbesondere erlaubt diese Ausführungsform auch die Bildung eines weiteren Einschubbereichs zur Aufnahme der rechteckigen Karte.

Nach einer weiteren bevorzugten Ausführungsform der Erfindung sind an dem Basisabschnitt ein oder mehrere Aufnahmeabschnitte zur Aufnahme weiterer scheibenförmiger Objekte, wie z.B. optischer Datenträger, angeordnet. Diese weiteren Aufnahmeabschnitte können vor dem Schließen der Hülle, z. B. zickzackförmig gefaltet werden, sodass entsprechende Aufnahmebereiche für die weiteren Objekte gebildet werden.

Die Erfindung ermöglicht es, eine vollständig vorgefertigte Hülle zu schaffen, die ohne weiteres unmittelbar von dem Benutzer eingesetzt werden kann. Alternativ kann die erfindungsgemäße Hülle auch in einem so genannten offenen Format vertrieben werden.. Dies hat insbesondere den Vorteil einer Volumenersparnis für die Lagerung und den Transport. Im letzteren Fall faltet der Benutzer die Hülle, um sie für die Benutzung vorzubereiten.

Vorzugsweise hat die Hülle im gefalteten Zustand ein Format von 126 x 125 x4 mm (BxHxT). Somit positioniert sich die Hülle mit all ihren Vorteilen gegenüber dem Jewel-Case sowohl im Bereich der gewerblichen als auch privaten Archivierung von Daten. Dabei ist das Gesamtgewicht der Hülle inklusive Datenträger unter 50g und macht darüber hinaus einen Postversand als Warensendung kompakt möglich.

Die erfindungsgemäße Hülle kann für verschiedene scheibenförmige Objekte verwendet werden. Diese können z.B. rund, oval, rechteckig oder quadratisch sein oder eine gestaltete Phantasieform aufweisen. Insbesondere eignet sich die erfindungsgemäße Hülle zur Aufnahme von scheibenförmigen Datenträgern, z.B. für eine Diskette, oder optische Datenträger, wie CD, DVD oder eine Blu-Ray-Disk. Dabei können auch optische Datenträger, die z.B. eine rechteckige Form haben, in der Hülle aufgenommen werden.

Im Weiteren werden bevorzugte Ausführungsformen der Erfindung mit Bezugnahme auf die Zeichnungen näher erläutert. Es zeigen:
- Figur 1: die Vorderseite des offenen Formats einer ersten Ausführungsform einer erfindungsgemäßen Hülle,
- Figur 2: die Rückseite des offenen Formats der erfindungsgemäßen Hülle der Figur 1,
- Figur 3: die Vorderseite eines offenen Formats einer alternativen Ausführungsform der erfindungsgemäßen Hülle mit einem Einklappbereich,
- Figur 4: die Vorderseite des offenen Formats einer weiteren Ausführungsform einer erfindungsgemäßen Hülle ohne Visitenkarteneinschub,
- Figur 5: die Vorderseite des offenen Formats einer weiteren Ausführungsform einer erfindungsgemäßen Hülle mit einem Schlitz an der Rückseite zur Aufnahme eines Verschlusselements mit Visitenkarteneinschub,
- Figur 6: eine alternative Ausführungsform zu der Ausführungsform der Figur 5,
- Figur 7: die Vorderseite des offenen Formats einer weiteren Ausführungsform einer erfindungsgemäßen Hülle, die gänzlich ohne Klebungen auskommt mit Visitenkarteneinschub,
- Figur 8: die Vorderseite des offenen Formats einer weiteren Ausführungsform einer erfindungsgemäßen Hülle zur Aufnahme von mehreren optischen Datenträgern.

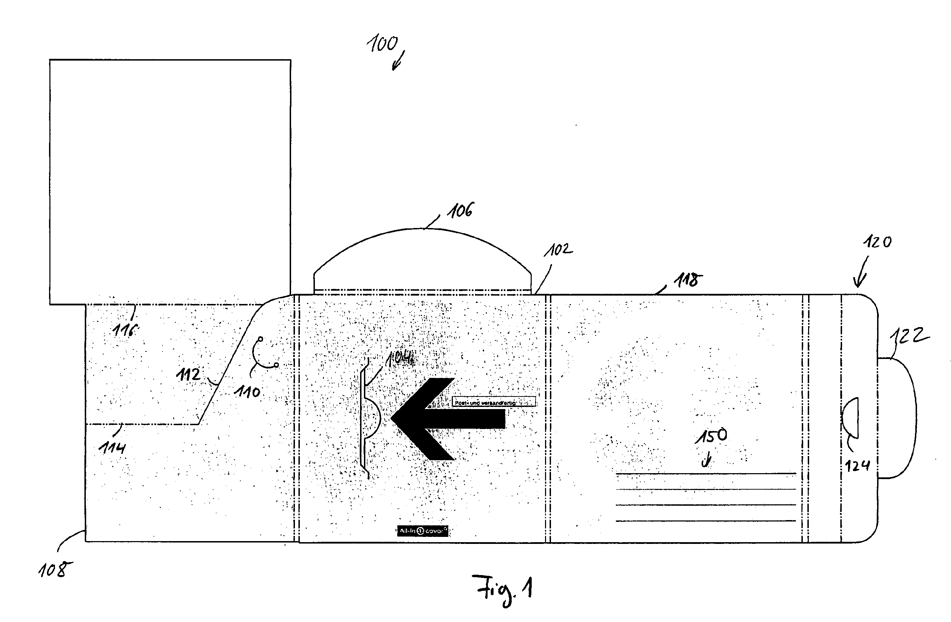

Die Figur 1 zeigt eine Hülle 100 im so genannten offenen Format. Vorzugsweise besteht die Hülle 100 aus Chromosulfat-Karton. Das offene Format der Hülle 100, so wie es in der Figur 1 dargestellt ist, erhält man beispielsweise nach Bedrucken des Kartons und einem Stanzvorgang.

Bei dem Stanzvorgang wird der Karton gleichzeitig entlang der strichpunktiert gezeigten Faltlinien gerillt. Nach der Stanzung wird das offene Format der Hülle 100 aus dem Bogen ausgebrochen. Die Rilllinien werden dabei außen angebracht, das heißt Material wird nach innen verdrängt, um eine entsprechende "Scharnierwirkung" der Rilllinien zu erreichen.

Die Hülle 100 hat einen im Wesentlichen rechteckigen Basisabschnitt 102, der beispielsweise eine Größe von ca. 12,5 cm x 12,5 cm hat. Der Basisabschnitt 102 hat eine Öffnung 104, die zum Verschluss der gefalteten Hülle 100 dient. Zusätzlich ist an der oberen Seite des Basisabschnitts 102 eine Längslasche 106 angeordnet.

An die linke Seite des Basisabschnitts 102 schließt sich der Einschubabschnitt 108 an. Der Einschubabschnitt 108 hat ein Sicherungselement 110, welches in der hier betrachteten Ausführungsform durch eine halbkreisförmige Stanzung gebildet wird. Das Sicherungselement ist zungenförmig ausgebildet und in einem Randbereich des Einschubabschnitts, der an die erste Seite des Basisabschnitts angrenzt, angeordnet.

Ferner hat der Einschubabschnitt 108 eine zunächst schräg und dann kurvenförmig verlaufende Stanzung 112, welche es ermöglicht, den Einschubabschnitt 108 entlang der Rilllinien 114 und 116 zu falten.

An die rechte Seite des Basisabschnitts 102 schließt sich ein Verschlussabschnitt 118 an, welcher in seinem peripheren Bereich 120 ein Verschlusselement 122 aufweist. Ferner ist in dem peripheren Bereich 120 ein Griffloch 124 angeordnet.

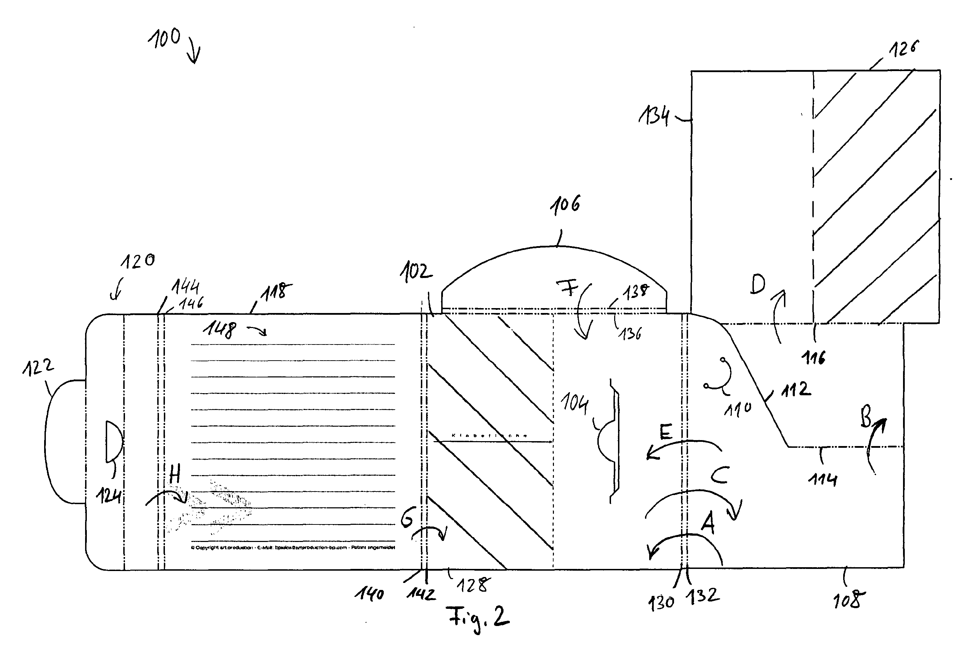

Beim Zusammenfalten der Hülle wird zunächst der Einschubabschnitt 108 gefaltet und mit dem Basisabschnitt 102 verklebt und die Längslasche 106 wird eingeklappt. Daraufhin kann zum Beispiel eine CD in die Hülle eingeschoben werden. Dann wird die Hülle durch Zuklappen des Verschlussabschnitts 118 geschlossen, indem das Verschlusselement 122 in die Öffnung 104 eingesteckt wird. Dieser Vorgang wird im Weiteren mit Bezugnahme auf die Figur 2, die die Rückseite des offenen Formats der Hülle 100 zeigt, näher erläutert.

Auf der Rückseite des offenen Formats 100 ist auf dem Einschubabschnitt 108 eine Klebefläche 126 und auf dem Basisabschnitt 102 eine entsprechende Klebefläche 128 vorgesehen. Die Klebeflächen 126 und 128 sind in der Figur schraffiert dargestellt.

In einem Schritt A wird der Einschubabschnitt 108 entlang der an der rechten seitlichen Begrenzung des Basisabschnitts 102 angeordneten Rilllinien 130 und 132 aus der Zeichenebene hinaus in Richtung auf den Basisabschnitt 102 geklappt. Danach wird in einem Schritt B der Einschubabschnitt 108 entlang der Rilllinie 114 gefaltet. Danach wird in einem Schritt C der bereits entlang der Rilllinie 114 gefaltete Einschubabschnitt 108 entlang der Rilllinien 130 und 132 wieder aufgeklappt. Danach wird in Schritt D der Klebebereich 134 mit der Klebefläche 126 in der gezeigten Richtung entlang der Rilllinie 116 gefaltet.

Der jetzt vollständig gefaltete Einschubabschnitt 108 wird dann in einem Schritt E entlang der Rilllinien 130, 132 wiederum in Richtung auf den Basisabschnitt 102 gefaltet, sodass die Klebeflächen 126 und 128 aufeinandergebracht werden. Zuvor wird zumindest einer der Klebeflächen 126, 128 ein Kleber aufgebracht, beispielsweise ein Dispersionskleber. Alternativ ist auf zumindest einer der Klebeflächen 126, 128 ein Klebestreifen mit einer Schutzfolie angeordnet, wobei die Schutzfolie vor der Durchführung des Schritt E abgezogen wird.

In dem nächsten Schritt F wird die Längslasche 106 entlang der Rilllinien 136 und 138 gefaltet. Dadurch wird der von dem Einschubabschnitt 108 gebildete Einschubbereich nach oben hin begrenzt.

Jetzt wird beispielsweise eine CD in den Einschubbereich eingeschoben, und zwar so, dass sie in das Sicherungselement 110 eingreift.

In dem Schritt G wird dann der Verschlussabschnitt 118 entlang der Rilllinien 140, 142 gefaltet, sodass der Einschubbereich verschlossen wird. In dem Schritt H wird der periphere Bereich 120 des Verschlussabschnitts 118 gefaltet, sodass das Verschlusselement 122 in die Öffnung 104 eingeschoben wird und dort einhakt. Damit ist die CD sicher in der Hülle 110 verpackt und kann beispielsweise versendet werden.

Vorzugsweise ist auf der Innenseite des Verschlusselements 122 ein Feld 148 für Beschriftungen oder dergleichen vorgesehen. Beispielsweise kann in das Feld 148 eine Inhaltsangabe, Beschreibung oder dergleichen eingedruckt oder manuell eingetragen werden. Ferner kann das Feld 148 auch für persönliche oder geschäftliche Mitteilungen verwendet werden.

Für die Versendung der Hülle 100, zum Beispiel per Post, ist auf der Frontseite des Verschlussabschnitts 118 ein Adressfeld 150 angeordnet (vgl. Figur 1). Ferner kann auch eine Briefmarke auf die Frontseite des Verschlussabschnitts 118 aufgeklebt werden.

Bei geschlossener Hülle 100 bildet also die Vorderseite des Verschlussabschnitts 118, das heißt der Bereich zwischen den Rilllinien 140 und 146 die gesamte Front der Hülle 100. Um ein spannungsfreies und bequemes Verschließen der Hülle zu ermöglichen, ist vorzugsweise die Breite des Verschlussabschnitts zwischen den Rilllinien 140 und 146 etwas größer als die entsprechende Breite des Basisabschnitts 102 zwischen den Rilllinen 130 und 142. Beispielsweise weist die Breite des Verschlussabschnitts 118 zwischen den Rilllinien 140 und 146 eine Zugabe von etwa ein bis zwei Millimetern gegenüber der Breite des Basisabschnitts 102 zwischen den Rilllinien 130 und 142 auf.

Alternativ kann an jeder Seite der Hülle 100 auch nur eine Rilllinie angeordnet sein. In diesem Fall ist an Stelle der Rilllinien 130, 132; 140, 142; 136, 138 und 144, 146 jeweils nur eine Rilllinie vorhanden. Dies vereinfacht die Konfektionierung, das heißt das Aufrichten, der Hülle, was sowohl bei maschineller als auch bei manueller Konfektionierung von Vorteil ist. Ferner wird dadurch die Hülle im gefalteten Zustand noch flacher. Auch bei einer solchen Ausführungsform ist die Breite des Verschlussabschnitts 118 zwischen den die Vorderseite begrenzenden Rilllinien etwas größer als die entsprechende Breite des Basisabschnitts 102.

Anstelle der Rillinienpaare 130, 132; 136, 138; 140, 142; 144, 146 kann auch jeweils nur eine einzige Rillinie vorhanden sein. Dies ist insbesondere für die maschinelle Faltung der Hülle vorteilhaft.

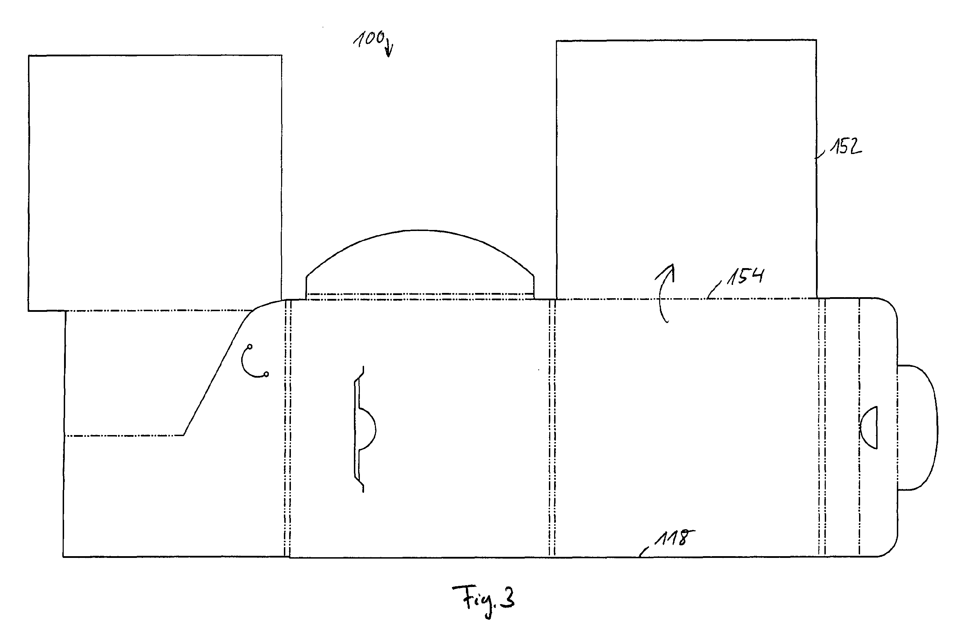

Die Figur 3 zeigt eine Variante der Ausführungsform der Figuren 1 und 2, wobei einander entsprechende Elemente mit gleichen Bezugszeichen gekennzeichnet werden. Im Unterschied zu der Ausführungsform der Figur 1 hat der Verschlussabschnitt 118 einen zusätzlichen Einklappbereich 152, der vor dem Verschließen der Hülle (vgl. Schritt G der Figur 2) entlang der Rilllinie 154 in die gezeigte Richtung nach innen geklappt wird. Der Einklappbereich 152 hat dabei die Funktion einer zusätzlichen Verstärkung der Hülle 100, um die CD vor Beschädigungen zu schützen. Ferner kann der Einklappbereich 152 auch eine dekorative Funktion haben, insbesondere dann, wenn die durch den Verschlussabschnitt 118 gebildete Frontseite der Hülle 110 Ausstanzungen aufweist, durch die hindurch der Einklappbereich 152 sichtbar wird.

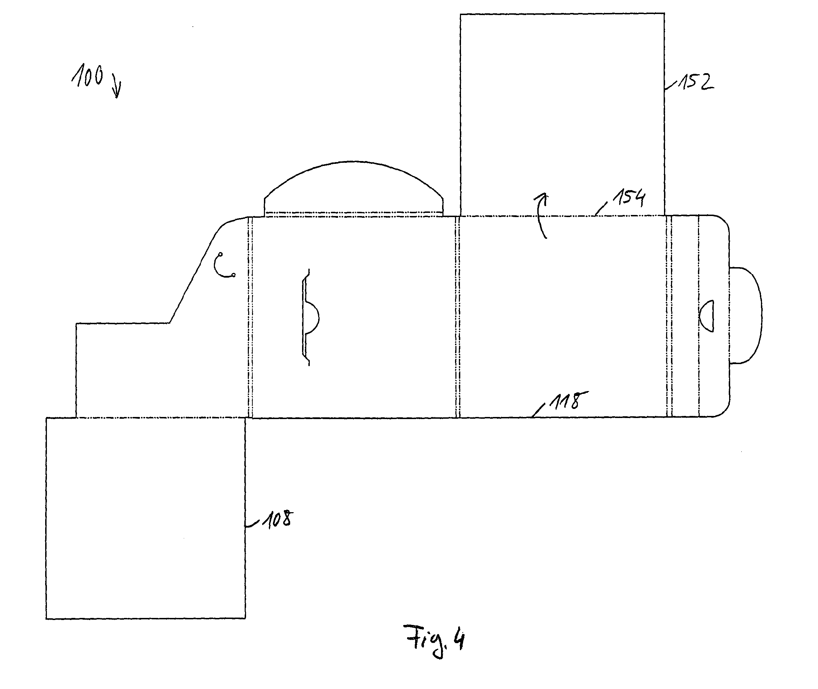

Die Figur 4 zeigt eine weitere Ausführungsform, bei der Elemente, die Elementen der Figuren 1, 2 und 3 entsprechen, wiederum mit denselben Bezugszeichen gekennzeichnet sind.

Im Unterschied zu der Ausführungsform der Figuren 1, 2 und 3 ist der Einschubabschnitt 108 in dem Ausführungsbeispiel der Figur 4 ohne Einschub für eine Visiten- oder Grußkarte ausgebildet.

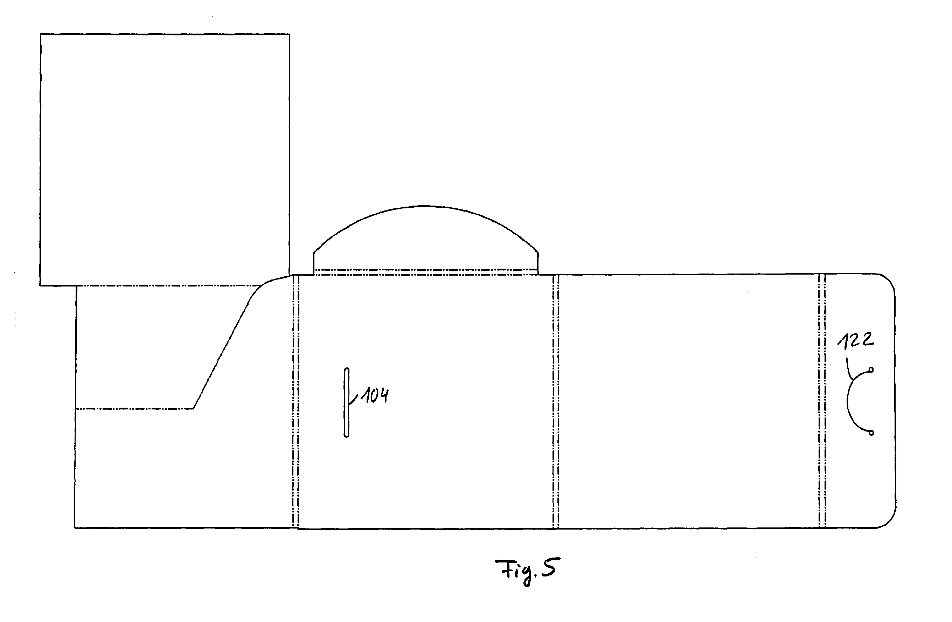

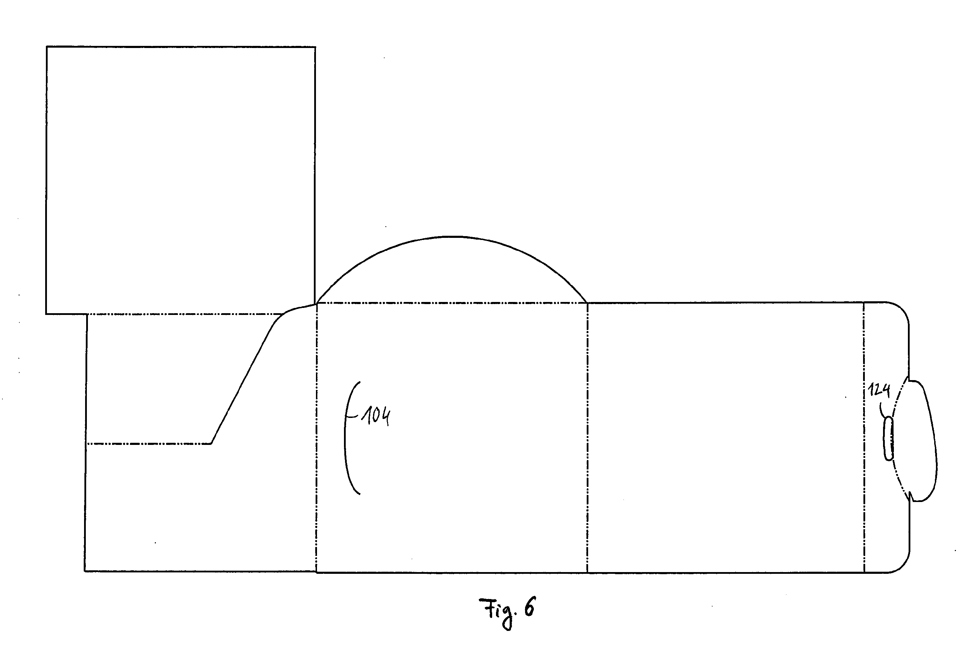

Die Ausführungsformen der Figuren 5 und 6 zeigen weitere Varianten der Ausführungsform der Figur 1, wobei bei der Ausführungsform der Figur 5 die Öffnung 104 schlitzförmig und das Verschlusselement 122 laschenförmig ausgebildet sind. Das laschenförmige Verschlusselement 122 wird dabei durch eine entsprechende, in etwa halbkreisförmige Stanzung gewonnen.

Bei der Ausführungsform der Figur 6 wird hingegen die Öffnung 104 bogenförmig eingestanzt. Das Griffloch 124 ist bei dieser Ausführungsform schlitzartig.

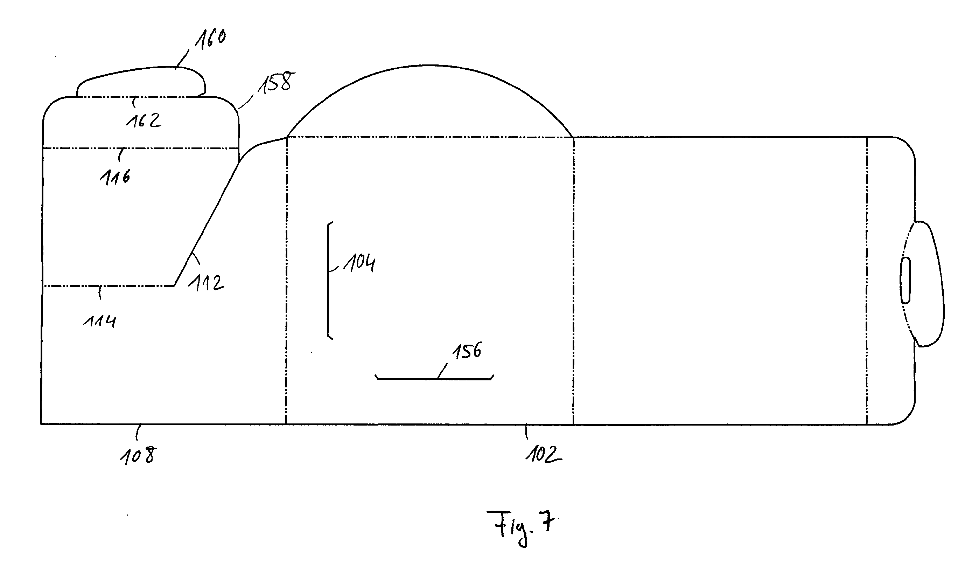

Bei der Ausführungsform der Figur 7 ist eine weitere Öffnung 156 in dem Basisabschnitt 102 eingestanzt. Der Einschubabschnitt 108 hat einen Endbereich 158 mit einem Einsteckelement 160. Zur Bildung des Einschubbereichs durch den Einschubabschnitt 108 erfolgen Faltungen entlang der Rilllinien 114, 116 und 162, um das Einsteckelement 160 in die Öffnung 156 einzuführen, wo es einrastet. Diese Ausführungsform der Hülle 100 ist besonders vorteilhaft, da sie gänzlich ohne Klebung auskommt. Ein weiterer Vorteil ist, dass in den Bereich zwischen den Rillinien 114 und 116 eine Visitenkarte oder dgl. eingeschoben werden kann. Alternativ kann dort auch eine Chipkarte eingeschoben werden.

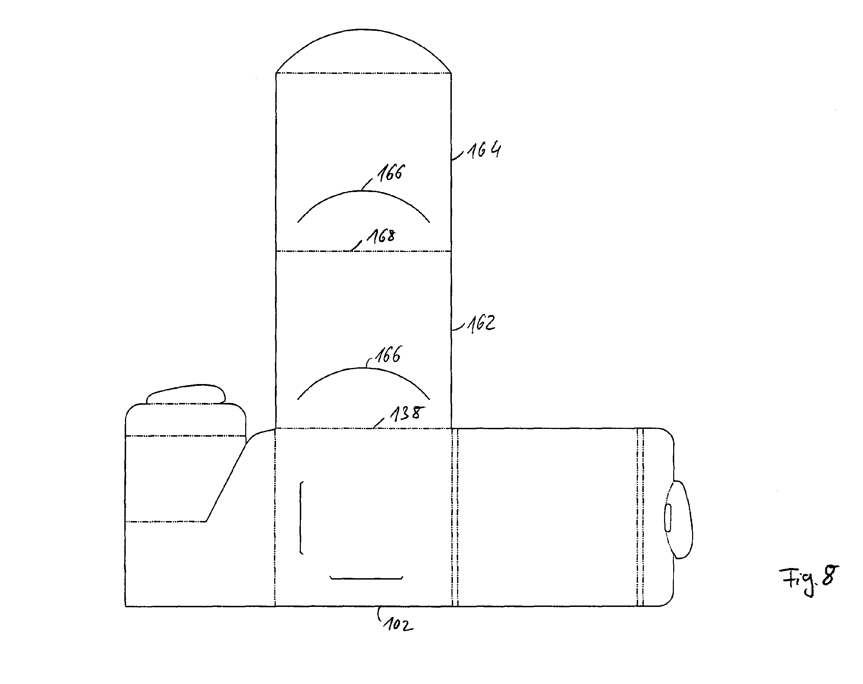

Die Figur 8 zeigt eine Variante der Ausführungsform der Figur 7, bei der der Basisabschnitt 102 zwei Aufnahmeabschnitte 162 und 164 aufweist, die jeweils Stanzungen 166 aufweisen. Die Aufnahmeabschnitte 162 und 164 werden vor dem Verschließen der Hülle 100 zickzackartig entlang der Rilllinien 138 und 168 gefaltet. Bei der Ausführungsform der Figur 8 können also bis zu 3 CDs in der Hülle 100 verpackt werden.

Generell sind hinsichtlich der ästhetischen Gestaltung der Hülle 100 durch Bedrucken, Ausstanzungen und dergleichen keine Grenzen gesetzt.

### Bezugszeichenliste

- 100: Hülle
- 102: Basisabschnitt
- 104: Öffnung
- 106: Längslasche
- 108: Einschubabschnitt
- 110: Sicherungselement
- 112: Stanzung
- 114: Rilllinie
- 116: Rilllinie
- 118: Verschlussabschnitt
- 120: peripherer Bereich
- 122: Verschlusselement
- 124: Griffloch
- 126: Klebefläche
- 128: Klebefläche
- 130: Rilllinie
- 132: Rilllinie
- 134: Klebebereich
- 136: Rilllinie
- 138: Rilllinie
- 140: Rilllinie
- 142: Rilllinie
- 144: Rilllinie
- 146: Rilllinie
- 148: Feld
- 150: Adressfeld
- 152: Einklappbereich
- 154: Rilllinie
- 156: Öffnung
- 158: Endbereich
- 160: Einsteckelement
- 162: Aufnahmeabschnitt
- 164: Aufnahmeabschnitt
- 166: Stanzung

## Patentansprüche

1. Hülle für ein scheibenförmiges Objekt aus einem faltbaren Material mit einem Basisabschnitt (102) zur Bildung einer Rückseite der Hülle, einem Einschubabschnitt (108) zur Bildung eines Einschubbereichs zur Aufnahme des Objekts und einen Verschlussabschnitt (118) zur Bildung einer Front der Hülle, wobei der Einschubabschnitt an einer ersten Seite (130, 132) des Basisabschnitts und der Verschlussabschnitt an einer zweiten Seite (140, 142) des Basisabschnitts angeordnet ist, die ersten und zweiten Seiten des Basisabschnitts einander gegenüberliegen, der Basisabschnitt an der Rückseite zur Aufnahme eines an einem peripheren Bereich (120) des Verschlussabschnitts angeordneten lösbaren und wieder verschließbaren Verschlusselements (122) ausgebildet ist, und der Einschubabschnitt ein Sicherungselement (110) zur Fixierung des Objekts in dem Einschubbereich aufweist.

2. Hülle nach Anspruch 1, wobei es sich bei dem faltbaren Material um gestrichenes Papier, Karton insbesondere Chromosulfat-Karton, und/oder Kunststoff, insbesondere Polyvenylchlorid (PVC), handelt.

3. Hülle nach Anspruch 1 oder 2, wobei das faltbare Material ausgestanzt ist und Faltlinien (114, 116, 130, 132, 134,136,138, 140, 142, 144,146), zumindest zur Bildung des Basisabschnitts, des Einschubabschnitts und des Verschlussabschnitts aufweist, wobei die Faltlinien vorzugsweise gerillt sind.

4. Hülle nach einem der Ansprüche 1, 2 oder 3, wobei das Sicherungselement zungenförmig ausgebildet ist und in einem Randbereich des Einschubabschnitts, der an die erste Seite des Basisabschnitts angrenzt, angeordnet ist.

5. Hülle nach einem der vorhergehenden Ansprüche 1 bis 4, wobei der Verschlussabschnitt in seinem peripheren Bereich (120) ein Griffloch (124) zur Lösung des Verschlusselements aufweist.

6. Hülle nach einem der vorhergehenden Ansprüche 1 bis 5, wobei der Einschubabschnitt zur Bildung eines weiteren Einschubbereichs zur Aufnahme einer rechteckigen Karte ausgebildet ist.

7. Hülle nach einem der vorhergehenden Ansprüche 1 bis 6, wobei der Verschlussabschnitt auf seiner Innenseite und/oder auf der Frontseite ein Beschriftungsfeld (148, 150) aufweist.

8. Hülle nach einem der vorhergehenden Ansprüche 1 bis 7, wobei der Basisabschnitt einander gegenüberliegende dritte und vierte (136, 138) Seiten aufweist, die auf den ersten und zweiten Seiten im Wesentlichen senkrecht stehen, und der Verschlussbereich einen an einer Verlängerung der dritten oder vierten Seite angeordneten Einklappbereich (152) aufweist.

9. Hülle nach einem der vorhergehenden Ansprüche 1 bis 8, wobei der Einschubabschnitt ein Verschlusselement (160) zur Aufnahme durch den Basisabschnitt aufweist.

10. Hülle nach einem der vorhergehenden Ansprüche 1 bis 9 mit einem an der dritten oder vierten Seite des Basisabschnitts angeordneten Aufnahmeabschnitt (162, 164) zur Aufnahme ein oder mehrerer weiterer scheibenförmiger Objekte.

11. Hülle nach einem der vorhergehenden Ansprüche 1 bis 10 im gefalteten Zustand.

12. Hülle nach einem der vorhergehenden Ansprüche 1 bis 10 im offenen, planen Zustand.

13. Hülle nach einem der vorhergehenden Ansprüche 1 bis 12, wobei die durch den Verschlussabschnitt (118) gebildete Front der Hülle eine größere Breite als der Basisabschnitt (102) aufweist.

14. Hülle nach einem der vorhergehenden Ansprüche 1 bis 13, wobei der Einschubbereich zur Aufnahme eines scheibenförmigen Datenträgers, z.B. für eine Diskette, oder eines scheibenförmigen optischen Datenträgers, wie z.B. einer CD, DVD oder einer Blu-Ray-Disk, ausgebildet ist.
